# EUROPEAN PATENT APPLICATION

(11) **EP 4 800 589 A1**
(43) Date of publication of application: **02.09.2026**
(21) Application number: 26156832.3
(22) Date of filing: 06.02.2026
(51) Int. Cl.: G06F 21/57, H04L 9/08, H04L 9/32, H04L 9/40

(54) **SYSTEMS AND METHODS FOR PROVISIONING A SOVEREIGN CLOUD ROOT CERTIFICATE**

(30) Priority: 28.02.2025 US 202519067825
(71) Applicant: Microsoft Technology Licensing, LLC, Redmond, WA 98052 (US)
(72) Inventor: LIU, Pu, Redmond, Washington, 98052 (US); CHEN, Buyu, Redmond, Washington, 98052 (US); KAMMA, Vasu Deva Rao, Redmond, Washington, 98052 (US); WU, Zhixuan, Redmond, Washington, 98052 (US); LEVINN, Benjamin Allen, Redmond, Washington, 98052 (US); CHAVAN, Sahil Sandeep, Redmond, Washington, 98052 (US)
(74) Representative: CMS Cameron McKenna Nabarro Olswang LLP

(57) **Abstract**

Systems and methods for provisioning a sovereign cloud root certificate, retrieve, during a boot process of a sovereign cloud, a root certificate from a first source; measure a cryptographic measurement of the root certificate in a Trusted Platform Module (TPM) of the sovereign cloud, which is stored in a Platform Configuration Register (PCR) of the TPM; generate a Certificate Signing Request (CSR) including the TPM-stored measurement for a leaf certificate based on the PCR; transmit the CSR to a certificate authority for verification; wherein the CSR is forwarded to a Hardware Attestation Service (HAS) for attestation; receiving an attestation result at the certificate authority, the attestation result indicating whether the CSR is valid; and based on the attestation result, receive by the sovereign cloud, the leaf certificate when the attestation result is positive, or a rejection of the CSR when a discrepancy is detected.

## Description

### BACKGROUND

Cloud computing has become the foundation of modern digital infrastructure, providing scalable, on-demand access to computing resources. Governments, financial institutions, and enterprises rely on cloud environments to store sensitive data and execute mission-critical operations. However, for sovereign entities, where data residency, compliance, and security are paramount, traditional cloud models present significant risks. A sovereign cloud is a specialized cloud environment designed to ensure compliance with government regulations, data sovereignty laws, and security policies. A sovereign cloud provides software boundaries in the cloud to establish the additional protection that regulated organizations require, using cloud guardrails, policy, hardware-based confidentiality, and encryption controls. It guarantees that data remains within specific geographic and jurisdictional boundaries, and subject to strict controls, minimizing the risk of foreign access or unauthorized data transfers. While sovereign clouds provide enhanced control, they also introduce unique security challenges, particularly in establishing a secure chain of trust for cryptographic operations.

### SUMMARY

Aspects of the disclosure relate to methods, apparatuses, and/or systems for provisioning a sovereign cloud root certificate.

In some aspects, the techniques described herein relate to a method for provisioning a sovereign cloud root certificate, including: during a boot process of a sovereign cloud, retrieving a root certificate from a first source; measuring a cryptographic measurement of the root certificate in a Trusted Platform Module (TPM) of the sovereign cloud; wherein the cryptographic measurement is stored in a Platform Configuration Register (PCR) of the TPM; generating a Certificate Signing Request (CSR) for a leaf certificate based on the PCR, the CSR including at least the TPM-stored measurement of the root certificate; transmitting the CSR to a certificate authority for verification; wherein the CSR is forwarded to a Hardware Attestation Service (HAS) for attestation, and wherein the HAS is configured to verify the CSR; receiving an attestation result at the certificate authority, the attestation result indicating whether the CSR is valid; and based on the attestation result, receiving by the sovereign cloud, the leaf certificate when the attestation result is positive, or a rejection of the CSR when a discrepancy is detected.

In some aspects, the techniques described herein relate to a method, wherein the HAS is configured to compare the TPM-stored measurement of the root certificate against an expected measurement and determine whether the TPM-stored measurement of the root certificate matches the expected measurement.

In some aspects, the techniques described herein relate to a method, wherein the expected measurement is based on an authenticated root certificate received from the certificate authority.

In some aspects, the techniques described herein relate to a method, wherein the PCR includes a boot event log, and wherein the HAS is configured to parse the event log for available root certificates, compare each identified root certificate against an authenticated root certificate received from the certificate authority, and reject the CSR if an invalid root certificate is identified.

In some aspects, the techniques described herein relate to a method, wherein the cryptographic measurement of the root certificate stored in the TPM is generated using a secure hash function.

In some aspects, the techniques described herein relate to a method, wherein the TPM attestation request initiated by the HAS includes a challenge-response mechanism using a nonce to prevent replay attacks.

In some aspects, the techniques described herein relate to a method, wherein when comparing the TPM-stored measurement of the root certificate against the expected measurement, the HAS is configured to compare the received attestation request with a pre-stored reference measurement of the root certificate.

In some aspects, the techniques described herein relate to a method, wherein the certificate authority is configured to integrate with a Public Key Infrastructure (PKI) framework to enforce additional security policies during the leaf certificate issuance.

In some aspects, the techniques described herein relate to a system for provisioning a client root certificate, including: memory storing computer program instructions; and one or more processors configured to execute the computer program instructions to: retrieve, during a boot process of a client device, a root certificate from a first source; measure a cryptographic measurement of the root certificate in a secure hardware component of the client device; wherein the cryptographic measurement is stored in a register of the secure hardware component; generate a signing request for a leaf certificate based on the register, the signing request including at least the stored measurement of the root certificate; transmit the signing request to a certificate authority for verification; wherein the signing request is forwarded to a hardware attestation mechanism for attestation, and wherein the hardware attestation mechanism is configured to verify the signing request; receive an attestation result at the certificate authority, the attestation result indicating whether the signing request is valid; and based on the attestation result, receive by the client device, the leaf certificate when the attestation result is positive, or a rejection of the signing request when a discrepancy is detected.

In some aspects, the techniques described herein relate to a system, wherein the hardware attestation mechanism is configured to compare the stored measurement of the root certificate against an expected measurement and determine whether the stored measurement of the root certificate matches the expected measurement.

In some aspects, the techniques described herein relate to a system, wherein the expected measurement is based on an authenticated root certificate received from the certificate authority.

In some aspects, the techniques described herein relate to a system, wherein the register includes a boot event log, and wherein the hardware attestation mechanism is configured to parse the event log for available root certificates, compare each identified root certificate against an authenticated root certificate received from the certificate authority, and reject the signing request if an invalid root certificate is identified.

In some aspects, the techniques described herein relate to a system, wherein the cryptographic measurement of the root certificate stored in the secure hardware component is generated using a secure hash function.

In some aspects, the techniques described herein relate to a system, wherein the secure hardware component attestation request initiated by the hardware attestation mechanism includes a challenge-response mechanism using a nonce to prevent replay attacks.

In some aspects, the techniques described herein relate to a system, wherein when comparing the stored measurement of the root certificate against the expected measurement, the hardware attestation mechanism is configured to compare the received attestation request with a pre-stored reference measurement of the root certificate.

In some aspects, the techniques described herein relate to a system, wherein the certificate authority is configured to integrate with a Public Key Infrastructure (PKI) framework to enforce additional security policies during the leaf certificate issuance.

In some aspects, the techniques described herein relate to a system, wherein the client device is a sovereign cloud.

In some aspects, the techniques described herein relate to one or more non-transitory computer storage media having computer executable instructions stored thereon which, when executed by one or more processors, cause the processors to execute a method for provisioning a client root certificate, including: during a boot process of a sovereign cloud, retrieving a root certificate from a first source; measuring a cryptographic measurement of the root certificate in a Trusted Platform Module (TPM) of the sovereign cloud; wherein the cryptographic measurement is stored in a Platform Configuration Register (PCR) of the TPM; generating a Certificate Signing Request (CSR) for a leaf certificate based on the PCR, the CSR including at least the TPM-stored measurement of the root certificate; transmitting the CSR to a certificate authority for verification; wherein the CSR is forwarded to a Hardware Attestation Service (HAS) for attestation; wherein the HAS is configured to compare the TPM-stored measurement of the root certificate against an expected measurement and determine whether the TPM-stored measurement of the root certificate matches the expected measurement; and wherein the expected measurement is based on an authenticated root certificate received from the certificate authority; receiving an attestation result at the certificate authority, the attestation result indicating whether the CSR is valid; and based on the attestation result, receiving by the sovereign cloud, the leaf certificate when the attestation result is positive, or a rejection of the CSR when a discrepancy is detected.

In some aspects, the techniques described herein relate to one or more non-transitory computer storage media, wherein the PCR includes a boot event log, and wherein the HAS is further configured to parse the event log for available root certificates, compare each identified root certificate against an authenticated root certificate received from the certificate authority, and reject the CSR if an invalid root certificate is identified.

In some aspects, the techniques described herein relate to one or more non-transitory computer storage media, wherein when comparing the TPM-stored measurement of the root certificate against the expected measurement, the HAS is configured to compare the received attestation request with a pre-stored reference measurement of the root certificate.

Various other aspects, features, and advantages will be apparent through the detailed description and the drawings attached hereto. It is also to be understood that both the foregoing general description and the following detailed description are exemplary and not restrictive of the scope of the disclosure.

### BRIEF DESCRIPTION OF THE FIGURES

FIG. 1 depicts an illustrative system 100 for provisioning a sovereign cloud root certificate, in accordance with at least one embodiment
FIG. 2 depicts an illustrative malicious cloud attack 200, in accordance with at least one embodiment;
FIG. 3 depicts an illustrative method 300 for provisioning a sovereign cloud root certificate, in accordance with at least one embodiment; and
FIG. 4 depicts an example computer system on which systems and methods described herein may be executed, in accordance with at least one embodiment.

While the present techniques are susceptible to various modifications and alternative forms, specific embodiments thereof are shown by way of example in the drawings and will herein be described in detail. The drawings may not be to scale. It should be understood, however, that the drawings and detailed description thereto are not intended to limit the present techniques to the particular form disclosed, but to the contrary, the intention is to cover all modifications, equivalents, and alternatives falling within the scope of the present techniques as defined by the appended claims.

### DETAILED DESCRIPTION

In the following description, for the purposes of explanation, numerous specific details are set forth in order to provide a thorough understanding of the various embodiments. It will be appreciated, however, by those having skill in the art, that the embodiments may be practiced without these specific details, or with an equivalent arrangement. In other cases, well-known structures and devices are shown in block diagram form in order to avoid unnecessarily obscuring the embodiments.

To mitigate the problems described herein, various embodiments are described herein which provide solutions and, in some cases just as importantly, address problems overlooked (or not yet foreseen) by others in the field. Furthermore, some embodiments address problems that are nascent and will become much more apparent in the future should trends in industry continue as expected. Further, because multiple problems are addressed, it should be understood that some embodiments are problem-specific, and not all embodiments address every problem with traditional systems described herein or provide every benefit described herein. That said, improvements that solve various permutations of these problems are described below.

One of the primary security challenges in a sovereign cloud environment is ensuring that the cryptographic infrastructure responsible for securing identities, communications, and sensitive transactions remains tamper-proof and resilient to cyber threats. A key issue is the initial establishment of trust in the certificate provisioning process. Sovereign clouds rely on public key infrastructure (PKI) to authenticate and secure communications, but at the stage of provisioning a root certificate, attackers may intercept, manipulate, or replace cryptographic keys, leading to a compromised trust chain. This vulnerability can enable man-in-the-middle attacks, where malicious entities forge credentials, intercept confidential communications, or gain unauthorized access to cloud resources.

Additionally, current software-based security mechanisms alone are insufficient to protect against sophisticated cyber threats. Malware and unauthorized system modifications can alter certificate provisioning processes or inject compromised cryptographic material, undermining the entire security framework. Ensuring compliance with strict regulatory requirements further complicates the issue, as a breach that compromises cryptographic trust could result in non-compliance, financial penalties, and operational disruptions. Beyond securing initial trust, sovereign cloud networks must also implement reliable key rotation and revocation mechanisms. Regular updates to cryptographic keys are essential for maintaining security, but without strong safeguards, these processes remain susceptible to unauthorized changes and attacks.

Furthermore, sovereign clouds are particularly susceptible to man-in-the-middle (MITM) attacks at the initial bootstrap phase due to a combination of factors related to their operational model, trust establishment mechanisms, and security constraints. At the initial bootstrap stage, a newly provisioned client must establish trust in the cloud's PKI by retrieving a root certificate authority (CA) bundle. However, because sovereign clouds are designed to operate independently, they do not inherently trust other sovereign clouds, nor do they always share the same root of trust as a public cloud provider like Microsoft Azure. This lack of a pre-established trust relationship leaves a critical gap during the bootstrap phase, where the client is unaware of its specific cloud environment and cannot condition its behavior based on cloud-specific identifiers. This universality makes it possible for an attacker to intercept, modify, or replace cryptographic material during the bootstrap process.

A significant attack vector arises from the fact that a client in a cold boot state has no awareness of which cloud environment it is bootstrapping in. Unlike traditional cloud environments where an entity maintains full control over the PKI Root, Certificate Authority (CA), and private keys, the sovereign cloud model delegates control to sovereign cloud operators (SCOs). This means that the entity no longer acts as the single authority ensuring that the PKI distribution process is protected from external manipulation. Consequently, an attacker can exploit the root certificate distribution process by injecting malicious certificates into the root CA bundle, thereby making the client unknowingly trust the attacker's infrastructure.

MITM attacks in this phase typically involve an attacker intercepting the request for a root CA bundle and inserting their own certificates. The manipulated client, now trusting both the legitimate and the attacker's certificates, may be redirected to communicate with an attacker's controlled network instead of the legitimate cloud services. This allows for further exploitation, including data interception, session hijacking, or unauthorized system modifications.

The sovereign cloud model also introduces new threat vectors, where one sovereign cloud operator could attack another sovereign cloud operator by exploiting vulnerabilities in the PKI root distribution system. In a scenario where Sovereign Cloud A distributes compromised root certificates to clients bootstrapping in Sovereign Cloud B, it could establish unauthorized access to services (e.g., Azure services) within that sovereign cloud. Similarly, a sovereign cloud operator could attempt to attack the entity itself by compromising data clusters within their borders using manipulated PKI root distribution.

Traditional cloud security mechanisms, such as certificate pinning, are ineffective in mitigating these MITM attacks within sovereign cloud environments. Since the location of a client is unknown at bootstrap, attackers can trick the system into accepting valid but malicious root CA certificates, bypassing pinned certificates. The lack of cloud-specific identifiers at the hardware level prevents the system from distinguishing between a legitimate bootstrap request and an attacker-controlled request, allowing MITM proxies to induce state changes that compromise the PKI chain of trust.

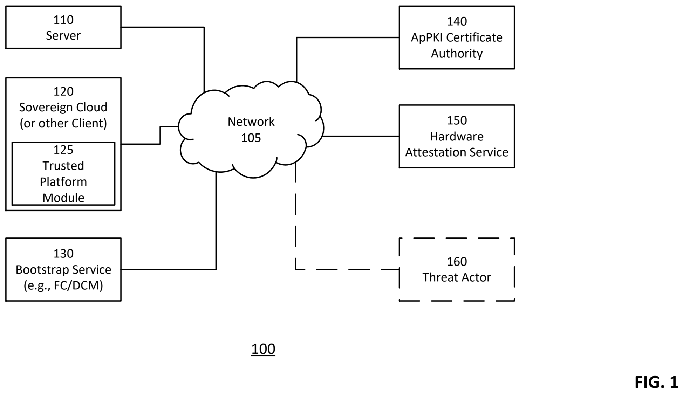

In a sovereign cloud environment, establishing a secure and verifiable root of trust is critical to ensuring the integrity of cryptographic operations. This disclosure describes systems and methods for hardware-based attestation of a root certificate using a secure hardware component such as a Trusted Platform Module (TPM) and a secure hardware attestation mechanism such as a Hardware Attestation Service (HAS), described in detail with reference to FIG. 1, herein. Various embodiments described herein ensure that only an authentic, untampered root certificate, e.g., an ApPki Root Certificate, is used for cryptographic provisioning, preventing man-in-the-middle (MITM) attacks, unauthorized certificate substitution, and malware-based tampering. By leveraging TPM measurements and remote attestation via HAS, the systems and methods described herein strengthen the security of the ApPki certificate issuance process in sovereign cloud infrastructures.

As described in detail herein, the process begins when a bootstrapper application, e.g., Minibootstrapper (MBS), retrieves a root certificate, e.g., ApPki Root Certificate (e.g., Root(A)), from a certificate authority, e.g., the ApPki Certificate Authority (APCA). By way of example, to prevent unauthorized modifications, MBS records a cryptographic measurement of the Root Certificate into a register of the secure hardware component, e.g., into the TPM Platform Configuration Register (PCR), ensuring that any future modifications to the Root Certificate will produce a different TPM measurement. When MBS submits a signing request, e.g., a Certificate Signing Request (CSR), for a leaf certificate, e.g., an ApPki Leaf Certificate, it attaches this TPM-stored measurement of the Root Certificate, allowing the APCA to verify that the request originates from a trusted and unmodified root certificate.

As understood herein, a root certificate is a fundamental cryptographic credential used in a public key infrastructure (PKI) to establish trust within a security domain. It serves as the highest level of trust in a certificate hierarchy, allowing other certificates issued under it to be validated as authentic. A root certificate is typically self-signed and stored securely to prevent unauthorized modifications or compromise.

For example, an ApPKI Root Certificate is a root certificate used within an ApPKI framework to authenticate and verify the integrity of cryptographic operations in a sovereign cloud environment. The ApPKI Root Certificate is issued and managed by certificate authority, e.g., ApPKI Certificate Authority (APCA), and serves as the trust anchor for all subordinate certificates within the system. When a device or service within the sovereign cloud requests a certificate, the ApPKI Root Certificate enables the verification of that certificate's authenticity through a cryptographic trust chain. To further enhance security, the ApPKI Root Certificate may be measured and stored in a secure hardware component, such as a trusted platform module (TPM), ensuring its integrity and resistance to tampering.

A certificate authority (CA) is a trusted entity responsible for issuing, managing, and revoking digital certificates within a public key infrastructure (PKI). It serves as a central authority that verifies the identity of entities, such as individuals, organizations, or devices, before granting them cryptographic credentials. A CA ensures that issued certificates are authentic and trustworthy by digitally signing them with its private key, allowing others to verify their validity using the CA's corresponding public key.

In some implementations, a CA may operate in a hierarchical structure with a root CA at the top, issuing intermediate certificates (e.g., leaf certificates) that delegate trust to subordinate CAs. This hierarchy helps distribute trust and improves security by limiting exposure of the root CA's private key. A CA is commonly used for securing communications, encrypting data, and authenticating users or devices in environments such as sovereign clouds, enterprise networks, and web security frameworks.

In some embodiments, upon receiving the CSR, the APCA does not immediately issue the ApPki Leaf Certificate. Instead, it forwards the TPM-measured Root Certificate fingerprint to a Hardware Attestation Service (HAS) for verification. The HAS then initiates a TPM attestation request to the sovereign cloud's TPM, requiring it to provide a signed attestation report proving that the Root Certificate remains unchanged and securely stored. The TPM responds with an attestation report containing a TPM Quote, which is cryptographically signed using the TPM's attestation key, e.g., along with a nonce for freshness verification and an Endorsement Key (EK) Certificate to prove TPM authenticity. HAS verifies the attestation evidence and confirms to APCA whether the Root Certificate matches the expected measurement.

If the HAS validates that the TPM-stored Root Certificate is authentic and unaltered, the APCA proceeds with issuing the ApPki Leaf Certificate, ensuring that all cryptographic operations inherit trust from a hardware-protected root certificate. However, if the HAS detects any discrepancies, the APCA rejects the CSR, preventing unauthorized certificates from being issued. This hardware-root-of-trust solution mitigates risks associated with software-based attacks, unauthorized root certificate substitution, and ensures compliance with strict sovereign cloud security policies. Furthermore, the verification policy of TPM measurements can be deployed to a HAS, allowing for secure root certificate rotation and revocation, while requiring only minimal modifications to existing cloud infrastructure implementations.

The systems and methods described herein provide a robust and scalable approach for securing sovereign cloud cryptographic trust, ensuring that all issued certificates are anchored to a verified and attested root certificate. Through TPM-based attestation, sovereign cloud operators can enforce hardware-backed security for critical cryptographic operations, safeguarding cloud environments from both internal and external threats. These and other features will be understood with reference to the figures described in detail herein.

FIG. 1 depicts an illustrative system 100 for provisioning a sovereign cloud root certificate, in accordance with at least one embodiment. In some embodiments, various devices and applications described herein may be configured to communicate via network 105. In some embodiments, computing devices and servers described herein may communicate over network 105, which, in various embodiments, may be any of a diverse range of networks, each tailored to specific needs: Local Area Networks (LANs) linking devices within a confined area such as a home or office; Wide Area Networks (WANs) connecting devices across larger geographical areas, such as cities or countries; Metropolitan Area Networks (MANs) serving as intermediaries, connecting LANs within a city or region; wireless networks; cellular networks; Storage Area Networks (SANs); and/or Virtual Private Networks (VPNs) secure data over public networks. In some embodiments, network 105 may be any combination of the above, which may be a combination of private and public networks.

In some embodiments, each of the elements of system 100 may be or may include applications executed on respective computing systems, though this need not always be the case. In some examples, one or more of the applications may be executed on a single computing system (which is not to suggest that such a computing system may not include multiple computing devices or nodes, or that each computing device or node need be co-located; indeed, a computing system including multiple servers that house multiple computing devices may be operated by a single entity and the multiple servers may be distributed, e.g., geographically).

For example, in some embodiments, an entity may include, host, or otherwise execute, on a server or other computing system, e.g., server 110, one or more of the software components described herein. Moreover, in some examples, the entity may also provide users access to applications and/or software components of server 110 on various user devices (e.g., Sovereign Cloud 120 described herein). In some embodiments, access may be provided via a web-based application hosted by a computing system managed by or provisioned by the entity, or which communicates with such a computing system via an application programming interface (API). Accordingly, one or more of the devices, systems, and/or elements depicted herein may communicate with one another via messages transmitted over network 105, such as the Internet and/or various other local area networks. For example, one or more applications may communicate via messages transmitted over network 105.

Similarly, in some embodiments, administrators and/or other managers within an entity or organization may use other client devices (not shown) to input data, change various user and/or system settings, etc. For example, admin users, e.g., from internal audit, compliance, or IT departments, may be responsible for managing and/or configuring system 100. In some embodiments, admin users may maintain and adjust the system, e.g., in response to various threats, as the organization evolves, or in response to various types of requests for access or information.

In some embodiments, system 100 may include at least one client device, such as, for example, sovereign cloud 120. As understood herein, a sovereign cloud is a cloud computing environment specifically designed to comply with national regulations, data sovereignty laws, and/or security policies, ensuring that data remains under the jurisdictional control of a specific government or regulatory entity. Unlike traditional public clouds, which operate globally with shared infrastructure, a sovereign cloud provides a dedicated, regionally controlled cloud infrastructure that prevents unauthorized data access by foreign or otherwise unauthorized entities. Sovereign cloud architectures may be implemented in various embodiments, including government-owned private clouds, regulated third-party managed clouds, and/or hybrid models where sovereign entities collaborate with commercial cloud providers under strict regulatory oversight. In various embodiments, these implementations may include fully air-gapped infrastructures or clients, isolated data centers, and/or federated sovereign clouds that interconnect while maintaining jurisdictional compliance.

In some embodiments, a sovereign cloud may be deployed across various types of client devices and/or systems, including, e.g., enterprise servers, government agency workstations, industrial control systems, financial transaction systems, and/or secure mobile computing devices. Depending on the security requirements of the sovereign entity, in some embodiments, the cloud may support a range of trusted execution environments, including hardware-backed security modules, secure enclaves for protecting cryptographic operations, and/or secure hardware components such as Trusted Platform Modules (TPMs), e.g., TPM 125. The cloud infrastructure itself may be composed of dedicated on-premises data centers, localized hyperscale cloud regions, or hybrid cloud architectures that integrate on-premises and cloud-native services.

A secure hardware component is a physical device or integrated module designed to provide hardware-enforced security functions, ensuring the integrity, confidentiality, and authenticity of critical computing processes. These components operate independently of the main processor and software stack, making them resistant to software-based attacks, unauthorized modifications, and tampering. One example of a secure hardware component is a TPM, which provides cryptographic operations, key management, and system integrity measurements. However, secure hardware components may take various forms in different embodiments, including hardware security modules (HSMs), secure enclaves, secure elements (SEs), and physically unclonable functions (PUFs).

In some embodiments, a secure hardware component may be embedded within a processor or chipset. These components create an isolated execution environment where sensitive data, cryptographic keys, and code may be processed securely, preventing unauthorized access even if the main operating system is compromised. In other embodiments, a secure hardware component may be a standalone cryptographic coprocessor that provides hardware-backed security operations, such as key generation, encryption, and digital signature verification. These components may be deployed in cloud servers, mobile devices, smart cards, and IoT devices to ensure secure authentication and data protection.

A secure hardware component may also include tamper-resistant features, such as anti-reverse engineering protections, side-channel attack mitigation, and self-destruct mechanisms. In certain implementations, these components may feature fused-in security keys or one-time programmable (OTP) memory that prevents key extraction and unauthorized firmware modifications. Some secure hardware components, such as HSMs and secure elements, are designed to meet industry standards, including FIPS 140-2/3, Common Criteria (CC), and GlobalPlatform specifications, ensuring compliance with stringent security requirements.

In networked environments, secure hardware components may support remote attestation mechanisms (as described in detail herein), enabling a verifier to confirm the integrity of a system before granting access to sensitive data or services. This attestation process may be facilitated through cryptographic endorsements, signed integrity reports, or challenge-response protocols, allowing the secure hardware component to prove its trustworthiness. In some embodiments, these components may be integrated with a public key infrastructure (PKI) to support identity verification and secure communications.

Trusted Platform Module (TPM) 125 is a hardware-based security component designed to perform cryptographic operations and enforce platform integrity through tamper-resistant mechanisms. In some embodiments, a TPM is a tamper-proof, cryptographically secure auditing component with firmware supplied by a trusted third party. The boot configuration log contains hash-chained measurements recorded in its Platform Configuration Registers (PCR) when the host last underwent the bootstrapping sequence. In some embodiments, TPM 125 may be implemented as a secure crypto-processor, which enables the generation, storage, and restricted usage of cryptographic keys, ensuring a secure foundation for system authentication and data protection. Unlike software-based security mechanisms, TPM 125 operates independently of the main system processor and memory, making it resistant to malware and unauthorized modifications. The TPM chip incorporates multiple physical security features, preventing tampering and mitigating the risks of unauthorized key extraction or modification of security-critical functions.

TPM 125 enhances system security by providing device authentication and attestation through a unique RSA key burned into the chip at the time of manufacturing. This embedded key enables secure identification of the device and supports remote attestation, allowing a verifier to confirm that a system is running an unaltered and trusted configuration. Additionally, in some embodiments, TPM 125 may be used for platform integrity verification by taking and securely storing cryptographic measurements of the system's boot process. During startup, the TPM records security measurements of firmware, operating system components, and boot loaders, ensuring that cryptographic operations and keys are only used when the system is in a verified state. These integrity checks provide a trusted computing environment for sovereign cloud 120 by detecting unauthorized changes to the boot process or software stack.

TPM-based cryptographic keys may be configured to enhance security against various attack vectors. One configuration prevents a TPM-based key from being extracted or used outside the TPM, ensuring that cryptographic operations remain secure within the chip. This mitigates phishing attacks and unauthorized credential use, as attackers cannot copy TPM-protected keys to an external system. Additionally, TPM 125 may support authorization-based access control, requiring an authorization value before allowing key usage. To prevent brute-force attacks, TPM 125 may include a dictionary attack protection mechanism, which activates upon multiple incorrect authorization attempts, temporarily locking the TPM to prevent further guesses.

Various embodiments of TPM 125 may comply with specifications set forth by a Trusted Computing Group (TCG), which defines multiple versions of TPM technology. TPM implementations may vary based on system requirements, including discrete TPM chips, firmware-based TPMs (fTPMs), and integrated TPMs within trusted execution environments (TEEs). These different configurations may allow TPM 125 to be deployed across a wide range of devices, including enterprise servers, cloud infrastructure, industrial control systems, personal computing devices, and/or other client devices. In some embodiments, TPM 125 may interact with other security components, such as Hardware Attestation Services (HAS) 150 described herein, Secure Boot processes, and/or Public Key Infrastructure (PKI) frameworks, to establish a comprehensive, hardware-enforced security model.

While the systems and methods described herein are described primarily with respect to a sovereign cloud, as noted herein, it will be clear to those skilled in the art that the systems and methods described herein may be implemented with respect to any client device such as a personal computer, laptop computer, tablet computer, server, smart phone, etc.

In some embodiments, network 105 may connect sovereign cloud 120 to a bootstrap service, e.g., bootstrap service 130. In some embodiments, a bootstrap service may be a system component responsible for the initial configuration, provisioning, and secure initialization of a device, application, or cloud environment. It serves as the first stage of execution, ensuring that all necessary resources, credentials, and configurations are in place before the system or application can function properly. A bootstrap service may operate in various environments, including secure computing infrastructures, cloud deployments, and cryptographic key provisioning frameworks. It may be designed to facilitate the retrieval of essential system files, establish initial trust, and verify the integrity of components during startup.

In some embodiments, a bootstrap service may retrieve configuration files, certificates, and security policies from a trusted authority before initializing system processes. This may involve secure communication with remote servers, such as certificate authorities, authentication services, or cloud management platforms. In sovereign cloud environments, a bootstrap service may interact with a certificate provisioning system to obtain root certificates and establish cryptographic trust before allowing the system to communicate within the cloud infrastructure. In these cases, the bootstrap service may include security measures such as digital signatures, integrity verification, and secure hardware-backed attestation to prevent unauthorized modifications or malicious interference.

In other embodiments, a bootstrap service may be implemented as part of a trusted boot process, ensuring that only verified and unaltered code is executed at system startup. This may involve measuring the system firmware, bootloader, and operating system components and storing these measurements in a hardware security module, such as a Trusted Platform Module (TPM), as described herein. If any discrepancies are detected, the bootstrap service may prevent the system from booting or initiate a recovery process to restore trusted components. Additionally, the bootstrap service may coordinate with external attestation services to validate the system's integrity before granting it access to secure resources.

In networked environments, a bootstrap service may be responsible for dynamically provisioning network parameters, security credentials, and device authentication information. In some variations, this may include issuing temporary cryptographic credentials that allow a system to join a network securely before receiving permanent credentials through a more robust authentication process. This can be particularly useful in scenarios where devices need to be deployed at scale without manual configuration, such as in cloud infrastructures, Internet of Things (IoT) deployments, or enterprise security frameworks.

In yet another embodiment, a bootstrap service may support certificate enrollment and key provisioning in a public key infrastructure (PKI). When a system is first deployed, the bootstrap service may generate a certificate signing request (CSR) and submit it to a certificate authority to obtain an authenticated identity for secure communications. As described herein, this process may be integrated with a hardware root of trust to ensure that cryptographic keys remain protected and that certificates are only issued to verified, authorized devices. Some implementations may also include mechanisms for key rotation and revocation, allowing the bootstrap service to periodically update security credentials in response to policy changes or detected security threats.

In some embodiments, network 105 may further include and/or connect to an ApPKI Certificate Authority (APCA) server, such as APCA 140. In some embodiments, the ApPKI Certificate Authority (APCA) server 140 may be a dedicated system responsible for managing the issuance, validation, and revocation of cryptographic certificates within an ApPKI framework. The APCA server may function as the central trust authority for provisioning certificates that authenticate and secure communications between various entities in a sovereign cloud or enterprise security infrastructure. It may integrate with a public key infrastructure (PKI) to ensure that issued certificates are rooted in a verifiable chain of trust. In certain implementations, the APCA server may be designed to support certificate issuance for a range of security-critical use cases, including secure bootstrapping, device authentication, and encrypted communications.

In some variations, the APCA server 140 may receive certificate signing requests (CSRs) from clients, such as sovereign cloud instances, computing devices, or services that require cryptographic credentials to establish trusted communications. Upon receiving a CSR, the APCA server may be configured to generate or otherwise provision and/or provide an ApPKI certificate to the requesting client, e.g., sovereign cloud 120.

An ApPKI certificate, in some embodiments, may be a cryptographic credential issued by the APCA server to establish a secure and authenticated identity for a device, service, or user within an ApPKI ecosystem. These certificates may be structured using standard cryptographic protocols, such as X.509, and may include details such as the entity's public key, the certificate's validity period, and the APCA's digital signature. The ApPKI certificate may be used to encrypt communications, verify the integrity of transmitted data, and authenticate connections between trusted systems. In some implementations, the certificate may be bound to a specific hardware identity, such as a TPM measurement, ensuring that only verified devices can use the issued certificate.

In some embodiments, ApPKI certificates may be categorized into different types based on their intended use. For example, an ApPKI root certificate may serve as the foundational trust anchor for an entire security domain, while an ApPKI leaf certificate may be issued to individual devices or applications that require authentication within a specific network. Leaf certificates may be used to secure connections between cloud workloads, authenticate access to sensitive data, or facilitate encrypted transactions between distributed systems. In certain embodiments, the validity and lifecycle of ApPKI certificates may be managed through periodic renewals, revocation mechanisms, or key rotation policies enforced by the APCA server.

In other embodiments, the APCA server may integrate with external security frameworks to enhance the robustness of the ApPKI certificate lifecycle. This may include cross-signing capabilities that allow ApPKI certificates to be recognized by third-party certificate authorities, or federated identity models that enable interoperability between sovereign cloud environments. The APCA server may also support certificate transparency logs, ensuring that issued certificates are publicly auditable to prevent misuse or unauthorized issuance. In some implementations, automated monitoring tools may be deployed alongside the APCA server to detect anomalies in certificate issuance patterns, providing an additional layer of security.

In some embodiments, system 100 may further include a hardware attestation mechanism, such as Hardware Attestation Service (HAS), such as HAS 150. In some embodiments, HAS 150 may be a security mechanism that validates the integrity of a computing system by verifying its cryptographic measurements against known trusted values. It may operate as an external verification authority that receives attestation reports from client devices or cloud instances seeking to prove their identity and trustworthiness. By using hardware-backed security features, such as a Trusted Platform Module or other secure enclaves, the service may ensure that a system has not been compromised or tampered with before allowing it to access sensitive resources. In certain implementations, HAS 150 may be deployed as part of a larger public key infrastructure (PKI) framework to provide additional trust assurances when issuing cryptographic certificates.

In some embodiments, Hardware Attestation Service 150 may be integrated with or otherwise in communication with APCA 140 to enforce strict authentication policies. When a client requests an ApPKI certificate, APCA 140 may forward the request to the attestation service to verify that the client's root certificate is valid and untampered. The attestation service may analyze the TPM-stored hash of the root certificate and compare it with the expected value stored in its trust database. If the root certificate matches the known valid measurement, the attestation service may notify APCA that the client has passed integrity verification, allowing APCA to proceed with issuing the requested certificate. If the root certificate does not match or has been altered, the attestation service may reject the verification request, preventing the client from receiving a certificate and mitigating potential security risks.

In some implementations, HAS 150 may be deployed in distributed cloud infrastructures where multiple sovereign cloud operators manage independent security policies. The attestation service may act as a neutral verification authority, ensuring that only systems running trusted software and firmware are granted access to shared cloud resources. In such cases, the attestation process may involve multiple layers of verification, including signature validation, TPM nonce challenges to prevent replay attacks, and real-time integrity monitoring. In certain embodiments, the attestation service may also provide historical attestation records, enabling cloud administrators to audit system trustworthiness over time.

In another embodiment, HAS 150 may support remote attestation mechanisms that allow third-party verifiers to assess the security posture of a system before granting it access to critical services. This may be useful in scenarios where an organization needs to ensure that external devices meet security compliance requirements before interacting with protected networks. The attestation service may provide a signed report confirming that a device meets predefined security policies, allowing the verifier to establish trust in the remote system.

In some embodiments, the hardware attestation mechanism may be implemented using other hardware, software, or a combination of both. In such cases, the attestation mechanism may be distributed across multiple components, including secure microcontrollers, firmware-based security modules, or software-defined security verification layers that interact with secure hardware components, such as the TPM. In some implementations, the hardware attestation mechanism may be hosted within a cloud-based security framework that performs remote attestation through network-connected services.

In some embodiments, the attestation process may involve invoking application programming interfaces (APIs) that allow external security services to interact with the TPM or other secure hardware components, providing cryptographic proof of a system's integrity. This may enable greater flexibility in deploying attestation mechanisms, allowing organizations to integrate hardware security verification with existing network security policies. In certain variations, the attestation mechanism may be modular, allowing specific components of the attestation process to be performed locally within the device while other verification steps occur remotely through a centralized security service. Such embodiments provide enhanced scalability and allow attestation services to be dynamically adapted based on the operational security requirements of the system.

These and other elements of system 100 may be provided in order to guard against cybersecurity attacks from threat actors such as threat actor 160. As understood herein, a threat actor may refer to an individual or group that intentionally attempts to harm a system, network, or data by exploiting vulnerabilities, e.g., with malicious motives such as stealing information, disrupting operations, or causing financial damage; essentially, anyone who actively poses a cyber threat to an organization or individual. In various embodiments, threat actor 160 may be any of various types of client devices, clouds, servers, and/or systems operated or otherwise controlled by a threat actor.

In various embodiments, a threat actor may attempt a man-in-the-middle (MITM) attack on a sovereign cloud during the bootstrap stage, leveraging vulnerabilities in the trust establishment process. For example, when a sovereign cloud, such as sovereign cloud 120, initializes, it may undergo a bootstrapping process from scratch, relying on bootstrapping software, such as Minibootstrapper (MBS). MBS, in some implementations, is responsible for retrieving an initialization file (.ini file), which is a plain text file containing configuration settings, from a bootstrap service machine within the same environment, such as a datacenter management (DCM) machine (e.g., bootstrap service 130), via an unsecured HTTP request. Once MBS obtains the .ini file, it extracts an IP address from the file and uses this address to contact an ApPKI Certificate Authority (APCA) to retrieve the ApPKI Root file. However, at this stage, MBS lacks a trusted root certificate, preventing it from verifying the authenticity of the ApPKI Root file, thereby creating an attack surface.

In certain embodiments, a threat actor 160 may exploit this vulnerability by redirecting MBS to an alternate, unauthorized resource instead of the legitimate APCA. This redirection can be achieved through various attack vectors, such as network interception, DNS spoofing, or manipulation of the bootstrap process itself. The unauthorized resource, controlled by threat actor 160, may then provide a compromised root certificate to the sovereign cloud. For instance, if threat actor 160 has full control of a malicious cloud (e.g., cloud B), which is associated with its own ApPKI Root B, the threat actor can inject a modified root certificate, ApPKI Root A_B, which comprises both the legitimate root certificate (Root A) and the malicious root certificate (Root B).

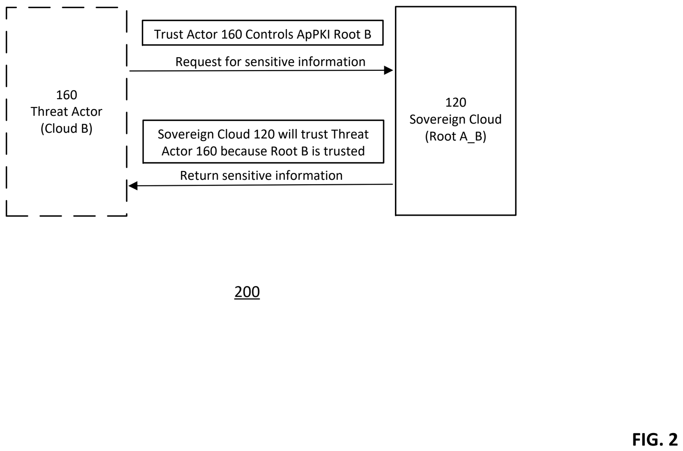

Turning briefly to FIG. 2, a malicious cloud attack 200 is shown according to at least one embodiment. As a result of the above attack, sovereign cloud 120, believing the bootstrapping process to be valid, will accept ApPKI Root A_B and establish trust with both Root A and Root B. This allows the sovereign cloud to successfully bootstrap with a seemingly valid ApPKI root certificate while unknowingly extending trust to the threat actor's infrastructure. Consequently, when sovereign cloud 120 subsequently requests a root certificate Root A from APCA 140 and is provisioned with an identity certificate, it remains compromised due to the presence of Root B. The presence of Root B enables the threat actor 160 to gain unauthorized access to sovereign cloud 120, thereby compromising its security, confidentiality, and integrity. In particular, because trust actor 160 controls ApPKI Root B, sovereign cloud 120 will trust threat actor 160 because Root B is trusted. Accordingly, without further protections in place, threat actor 160 is able to request sensitive information from sovereign cloud 120, and sovereign cloud 120 will provide the requested information without ever detecting a security issue.

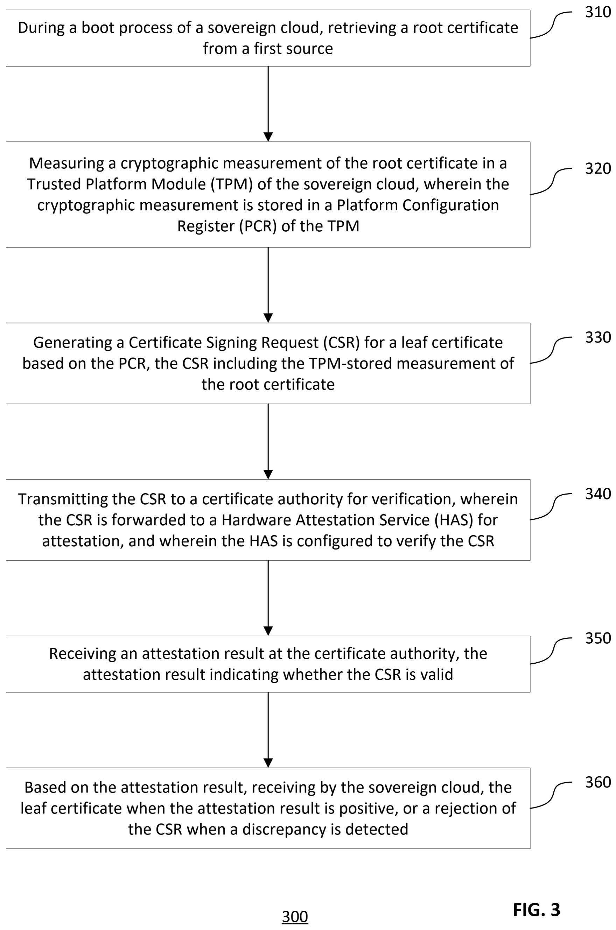

Returning to FIG. 1, various embodiments address MITM and other threats by implementing the various elements of system 100 described herein. These and other features of system 100 will be further understood with reference to method 300 of FIG. 3, herein.

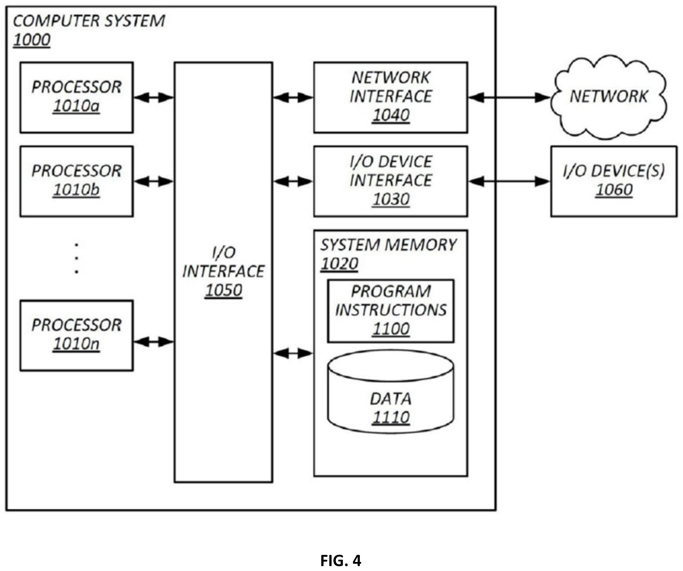

FIG. 3 depicts an illustrative method 300 for provisioning a sovereign cloud root certificate, in accordance with at least one embodiment. In various embodiments, method 300 may be implemented by system 100, executing code in one or more processors therein. For example, in some embodiments, method 300 may be performed on a computer (e.g., computer system 1000 of FIG. 4) having one or more processors (e.g., processor(s) 1010 of FIG. 4) and memory (e.g., system memory 1020 of FIG. 5), and one or more code sets, applications, programs, modules, and/or other software stored in the memory and executing in or executed by one or more of the processor(s).

Method 300 begins at step 310, during a boot process of a sovereign cloud, e.g., sovereign cloud 120, when a root certificate is retrieved from a first source. In some embodiments, the first source may be an ApPKI Certificate Authority (APCA) server, e.g., APCA 140, that issues cryptographic credentials to ensure the secure operation of cloud infrastructure. It should be noted that at this point the sovereign cloud may not be able to identify this first source and/or whether this source is in fact the APCA server 140 or a threat actor 160. In some embodiments, the retrieval process may be initiated by a Minibootstrapper (MBS) or another secure initialization component of the sovereign cloud system. In some embodiments, the root certificate may be obtained from a local secure storage module if it has been previously provisioned. Alternatively, in embodiments where the sovereign cloud instance is being initialized for the first time, the root certificate may be requested from an external certificate provisioning service, e.g., over a secure communication channel.

As described herein with reference to FIG. 2, because of the threat of a man-in-the-middle attack, sovereign cloud 120 cannot assume that a received ApPKI root certificate is authentic, e.g., that it has been sent from APCA 140. Accordingly, embodiments described herein rely on features of a Trusted Platform Module, e.g., TPM 125, installed in the sovereign cloud 120.

TPM technology is designed to provide hardware-based, security-related functions. A TPM chip is a secure crypto-processor that is designed to carry out cryptographic operations. In various embodiments, the chip may include multiple physical security mechanisms to make it tamper-resistant, and malicious software is unable to tamper with the security functions of the TPM. Some of the advantages of TPM technology are (1) the ability to generate, store, and limit the use of cryptographic keys; (2) the ability to use the TPM for device authentication by using the TPM's unique RSA key, which is burned into the chip; and (3) the ability to help ensure platform integrity by taking and storing security measurements of the boot process. TPM functions are typically used for system integrity measurements and for key creation and use. As described herein, during the boot process of a system, the boot code that is loaded (including firmware and the operating system components) may be measured and recorded in the TPM. The integrity measurements may be used as evidence for how a system started and to make sure that a TPM-based key was used only when the correct software was used to boot the system.

TPM-based keys may be configured in various ways. One option is to make a TPM-based key unavailable outside the TPM. This help to mitigate phishing attacks because it prevents the key from being copied and used without the TPM. TPM-based keys may also be configured to require an authorization value to use them. If too many incorrect authorization guesses occur, the TPM activates its dictionary attack logic and prevents further authorization value guesses.

Accordingly, at step 320, a cryptographic measurement of the root certificate is taken in a TPM of the sovereign cloud. In some embodiments, this measurement is performed by hashing the contents of the root certificate using a secure cryptographic algorithm, such as SHA-256, and storing the result as a verifiable integrity value. The measurement ensures that any modification to the root certificate will result in a different hash value, allowing the system to detect potential tampering. In other embodiments, the measurement may include additional metadata, such as timestamps or system state information, to further enhance security. Variations of this step may include extending the measurement process to include other components of the cloud instance, such as the firmware, bootloader, or operating system, in order to create a comprehensive trust chain.

In some embodiments, the cryptographic measurement of the root certificate may be stored in a Platform Configuration Register (PCR) of the TPM. In some embodiments, the TPM may have multiple PCRs, each designated for different system integrity measurements. The root certificate measurement may be stored in a specific PCR reserved for cryptographic key integrity, ensuring that it remains isolated from other measurements. In certain implementations, the TPM may enforce policies that prevent unauthorized modifications to the PCR value, ensuring that only trusted system components are allowed to perform updates. This approach enhances security by making it computationally infeasible for an attacker to forge a valid measurement without having direct access to the TPM.

At step 330, a Certificate Signing Request (CSR) for a leaf certificate is generated based on the PCR measurement, with the CSR including the TPM-stored measurement of the root certificate. In some embodiments, the CSR may be created by the sovereign cloud instance and formatted according to established public key infrastructure (PKI) standards, such as X.509. The CSR may include a public key associated with the sovereign cloud instance, along with metadata describing the entity requesting the certificate. The TPM-stored measurement of the root certificate may be included as an extension in the CSR, ensuring that the certificate authority can verify that the request originates from a trusted source. In some variations, the CSR may be signed using a private key stored within the TPM, further ensuring that only an authenticated system can submit the request. In certain implementations, additional security measures, such as nonces or challenge-response mechanisms using a nonce to prevent replay attacks, may be included in the CSR.

At step 340, in some embodiments, the CSR may be transmitted to a certificate authority for verification. In some embodiments, the transmission occurs over a secure communication channel, such as a TLS-encrypted connection, to prevent interception or tampering. The certificate authority may be an ApPki Certificate Authority (APCA) server configured to issue certificates for sovereign cloud environments. In some embodiments, the CSR may be accompanied by additional authentication data, such as a digitally signed statement from the sovereign cloud instance, confirming its identity. In certain implementations, a verification token generated by the TPM may also be included to prove that the CSR originated from a system with a trusted root certificate. However, as described herein, in a MITM attack, the sovereign cloud may not be aware that it has an untrusted root certificate, received from threat actor 160, and. The transmission may occur asynchronously, allowing the certificate authority to process the request in a queued manner. The certificate authority may integrate with a Public Key Infrastructure (PKI) framework to enforce additional security policies during the leaf certificate issuance.

In some embodiments, the CSR may forwarded to a Hardware Attestation Service (HAS) for attestation, and the HAS may be configured to verify the CSR. In some embodiments, HAS is an independent verification service that ensures the integrity of TPM-based measurements before approving cryptographic requests. HAS may receive the CSR along with the TPM-stored measurement of the root certificate and compare it against a pre-approved list of known valid certificates or against a specific valid certificate known to be associated with the specific TPM. In some embodiments, the HAS may be configured to compare the TPM-stored measurement of the root certificate against an expected measurement and determine whether the TPM-stored measurement of the root certificate matches the expected measurement. In some variations, the expected measurement may be based on an authenticated root certificate received from the certificate authority.

In some embodiments, HAS 150 may request additional attestation evidence from the sovereign cloud instance, such as a TPM Quote, which provides a signed statement from the TPM confirming that the stored PCR measurement matches the expected value. If the attestation check passes, HAS may send a positive attestation result to the certificate authority, indicating that the sovereign cloud instance is operating with an unaltered and trusted root certificate. If discrepancies are detected, HAS may reject the CSR, preventing an unauthorized or compromised system from receiving a valid leaf certificate.

In some embodiments, the PCR may include, among other metadata, a boot event log. The HAS 150 may be configured to parse the event log for available root certificates, compare each identified root certificate against an authenticated root certificate received from the certificate authority, and reject the PCR if an invalid root certificate is identified. This may help ensure that only trusted root certificates are used in cryptographic operations and prevents unauthorized certificates from being introduced into the system. In certain implementations, the HAS may employ real-time log analysis techniques to continuously monitor boot event logs for anomalies or unauthorized modifications, further strengthening the security posture of the sovereign cloud infrastructure. Additionally, the HAS 150 may generate an audit report detailing all root certificates encountered in the PCR during the attestation process, allowing security administrators to review certificate usage and ensure compliance with predefined security policies.

In some embodiments, the HAS 150 may also enforce additional validation mechanisms to verify the authenticity of root certificates found within the boot event log. In some embodiments, the HAS may extract cryptographic hashes of each identified root certificate and cross-check them against a trusted repository of pre-approved certificates. If any root certificate is found that does not correspond to an authenticated root certificate issued by the certificate authority, the HAS may flag the system as untrusted and reject the attestation request. In some variations, the HAS may implement a layered security approach, where it examines not only the root certificates but also any intermediate certificates present in the boot sequence to detect unauthorized changes in the trust chain. This approach may enhance the overall robustness of the attestation process by ensuring that the system has not been compromised at any point during the boot process.

At step 350, in some embodiments, an attestation result is received at the certificate authority, indicating whether the CSR is valid. In some embodiments, the certificate authority processes the attestation result to determine whether the sovereign cloud instance has met all security and integrity requirements for certificate issuance. A positive attestation result confirms that the TPM-stored root certificate measurement matches the expected value, allowing the certificate authority to proceed with issuing the requested leaf certificate. In some embodiments, the attestation result may include additional metadata, such as a timestamp or cryptographic signature from HAS, ensuring that the verification process is auditable. In certain implementations, if the attestation result indicates an issue, the certificate authority may initiate a remediation process, such as requesting a fresh attestation report or notifying security administrators of a potential compromise.

At step 360, based on the attestation result, in some embodiments, the sovereign cloud instance may receive the leaf certificate if the attestation result is positive, or a rejection of the CSR if a discrepancy is detected. In some embodiments, when the attestation is successful, the certificate authority signs and issues the ApPki Leaf Certificate, allowing the sovereign cloud instance to securely participate in cryptographic operations, such as authentication, encrypted communications, and system integrity verification. The issued leaf certificate may be stored securely within the sovereign cloud infrastructure and used to establish trust with other services.

Embodiments described herein provide several key benefits that improve real-world cloud security and cryptographic infrastructure.

One advantage is that no egression is needed. In some embodiments, the system does not require external or outbound connections to retrieve or validate root certificates, reducing the risk of data leakage and minimizing attack surfaces. This is particularly beneficial in sovereign cloud environments where regulatory policies may prohibit external data transmission beyond a controlled jurisdiction.

Another benefit is that no additional cryptographic signing step is required for root certificate provisioning. In some implementations, the proposed method leverages existing TPM-based attestation mechanisms to verify the integrity of the root certificate, removing the need for additional cryptographic signing operations. This reduces processing overhead and accelerates certificate provisioning, making it more efficient for large-scale cloud deployments.

Additionally, the systems and methods may adhere to pre-approved PKI Distribution Protocols. In some embodiments, the proposed approach aligns with standardized PKI infrastructure frameworks, ensuring compatibility with established security policies and regulatory guidelines. This allows organizations to integrate the solution seamlessly into existing cryptographic infrastructures without the need for significant modifications or proprietary implementations.

Embodiments described herein may also maintain current ApPki leaf certificate signing protocols put in place by an entity or organization, ensuring global compatibility. By preserving the existing leaf certificate issuance workflow, organizations can implement the proposed security enhancements without disrupting legacy systems or requiring modifications to dependent applications. This ensures a smooth transition and interoperability across different cloud environments.

Another key improvement is the leverage of a hardware root of trust for enhanced security. In some embodiments, the systems and methods employ TPM-based attestation to verify the authenticity and integrity of cryptographic operations, providing a robust defense against software-based attacks and certificate forgery. This ensures that only verified, tamper-proof root certificates are used in secure transactions, thereby strengthening trust in the cloud security model.

Additionally, the systems and methods described herein may require minimal changes to existing code currently installed in an organization or entity. In some embodiments, the solution may be designed to integrate seamlessly with existing cloud security infrastructures, minimizing development effort and deployment complexity. Organizations can adopt this enhanced root certificate provisioning process without significant reengineering, making it a practical and cost-effective security upgrade.

Some embodiments may execute the above operations on a computer system, such as the computer system of FIG. 4, which is a diagram that illustrates a computing system 1000 in accordance with embodiments of the present techniques. Various portions of systems and methods described herein, may include or be executed on one or more computer systems similar to computing system 1000. Further, processes and modules described herein may be executed by one or more processing systems similar to that of computing system 1000.

Computing system 1000 may include one or more processors (e.g., processors 1010a-1010n) coupled to system memory 1020, an input/output I/O device interface 1030, and a network interface 1040 via an input/output (I/O) interface 1050. A processor may include a single processor or a plurality of processors (e.g., distributed processors). A processor may be any suitable processor capable of executing or otherwise performing instructions. A processor may include a central processing unit (CPU) that carries out program instructions to perform the arithmetical, logical, and input/output operations of computing system 1000. A processor may execute code (e.g., processor firmware, a protocol stack, a database management system, an operating system, or a combination thereof) that creates an execution environment for program instructions. A processor may include a programmable processor. A processor may include general or special purpose microprocessors. A processor may receive instructions and data from a memory (e.g., system memory 1020). Computing system 1000 may be a uni-processor system including one processor (e.g., processor 1010a), or a multi-processor system including any number of suitable processors (e.g., 1010a-1010n). Multiple processors may be employed to provide for parallel or sequential execution of one or more portions of the techniques described herein. Processes, such as logic flows, described herein may be performed by one or more programmable processors executing one or more computer programs to perform functions by operating on input data and generating corresponding output. Processes described herein may be performed by, and apparatus may also be implemented as, special purpose logic circuitry, e.g., an FPGA (field programmable gate array) or an ASIC (application specific integrated circuit). Computing system 1000 may include a plurality of computing devices (e.g., distributed computer systems) to implement various processing functions.

I/O device interface 1030 may provide an interface for connection of one or more I/O devices 1060 to computer system 1000. I/O devices may include devices that receive input (e.g., from a user) or output information (e.g., to a user). I/O devices 1060 may include, for example, graphical user interface presented on displays (e.g., a cathode ray tube (CRT) or liquid crystal display (LCD) monitor), pointing devices (e.g., a computer mouse or trackball), keyboards, keypads, touchpads, scanning devices, voice recognition devices, gesture recognition devices, printers, audio speakers, microphones, cameras, or the like. I/O devices 1060 may be connected to computer system 1000 through a wired or wireless connection. I/O devices 1060 may be connected to computer system 1000 from a remote location. I/O devices 1060 located on remote computer system, for example, may be connected to computer system 1000 via a network and network interface 1040.

Network interface 1040 may include a network adapter that provides for connection of computer system 1000 to a network. Network interface 1040 may facilitate data exchange between computer system 1000 and other devices connected to the network. Network interface 1040 may support wired or wireless communication. The network may include an electronic communication network, such as the Internet, a local area network (LAN), a wide area network (WAN), a cellular communications network, or the like.

System memory 1020 may be configured to store program instructions 1100 or data 1110. Program instructions 1100 may be executable by a processor (e.g., one or more of processors 1010a-1010n) to implement one or more embodiments of the present techniques. Instructions 1100 may include modules of computer program instructions for implementing one or more techniques described herein with regard to various processing modules. Program instructions may include a computer program (which in certain forms is known as a program, software, software application, script, or code). A computer program may be written in a programming language, including compiled or interpreted languages, or declarative or procedural languages. A computer program may include a unit suitable for use in a computing environment, including as a stand-alone program, a module, a component, or a subroutine. A computer program may or may not correspond to a file in a file system. A program may be stored in a portion of a file that holds other programs or data (e.g., one or more scripts stored in a markup language document), in a single file dedicated to the program in key, or in multiple coordinated files (e.g., files that store one or more modules, sub programs, or portions of code). A computer program may be deployed to be executed on one or more computer processors located locally at one site or distributed across multiple remote sites and interconnected by a communication network.

System memory 1020 may include a tangible program carrier having program instructions stored thereon. A tangible program carrier may include a non-transitory computer readable storage medium. A non-transitory computer readable storage medium may include a machine-readable storage device, a machine-readable storage substrate, a memory device, or any combination thereof. Non-transitory computer readable storage medium may include non-volatile memory (e.g., flash memory, ROM, PROM, EPROM, EEPROM memory), volatile memory (e.g., random access memory (RAM), static random access memory (SRAM), synchronous dynamic RAM (SDRAM)), bulk storage memory (e.g., CD-ROM and/or DVD-ROM, hard-drives), or the like. System memory 1020 may include a non-transitory computer readable storage medium that may have program instructions stored thereon that are executable by a computer processor (e.g., one or more of processors 1010a-1010n) to cause the subject matter and the functional operations described herein. A memory (e.g., system memory 1020) may include a single memory device and/or a plurality of memory devices (e.g., distributed memory devices). Instructions or other program code to provide the functionality described herein may be stored on a tangible, non-transitory computer readable media. In some cases, the entire set of instructions may be stored concurrently on the media, or in some cases, different parts of the instructions may be stored on the same media at different times.

I/O interface 1050 may be configured to coordinate I/O traffic between processors 1010a-1010n, system memory 1020, network interface 1040, I/O devices 1060, and/or other peripheral devices. I/O interface 1050 may perform protocol, timing, or other data transformations to convert data signals from one component (e.g., system memory 1020) into a format suitable for use by another component (e.g., processors 1010a-1010n). I/O interface 1050 may include support for devices attached through various types of peripheral buses, such as a variant of the Peripheral Component Interconnect (PCI) bus standard or the Universal Serial Bus (USB) standard.

Embodiments of the techniques described herein may be implemented using a single instance of computer system 1000 or multiple computer systems 1000 configured to host different portions or instances of embodiments. Multiple computer systems 1000 may provide for parallel or sequential processing/execution of one or more portions of the techniques described herein.

Those skilled in the art will appreciate that computer system 1000 is merely illustrative and is not intended to limit the scope of the techniques described herein. Computer system 1000 may include any combination of devices or software that may perform or otherwise provide for the performance of the techniques described herein. For example, computer system 1000 may include or be a combination of a cloud-computing system, a data center, a server rack, a server, a virtual server, a desktop computer, a laptop computer, a tablet computer, a server device, a client device, a mobile telephone, a personal digital assistant (PDA), a mobile audio or video player, a game console, a vehicle-mounted computer, or a Global Positioning System (GPS), or the like. Computer system 1000 may also be connected to other devices that are not illustrated, or may operate as a stand-alone system. In addition, the functionality provided by the illustrated components may in some embodiments be combined in fewer components or distributed in additional components. Similarly, in some embodiments, the functionality of some of the illustrated components may not be provided or other additional functionality may be available.

Alternatively or in addition to the other examples described herein, examples include any combination of the following clauses:
Clause A. A method for provisioning a sovereign cloud root certificate, comprising: during a boot process of a sovereign cloud, retrieving a root certificate from a first source; measuring a cryptographic measurement of the root certificate in a Trusted Platform Module (TPM) of the sovereign cloud; wherein the cryptographic measurement is stored in a Platform Configuration Register (PCR) of the TPM; generating a Certificate Signing Request (CSR) for a leaf certificate based on the PCR, the CSR comprising at least the TPM-stored measurement of the root certificate; transmitting the CSR to a certificate authority for verification; wherein the CSR is forwarded to a Hardware Attestation Service (HAS) for attestation, and wherein the HAS is configured to verify the CSR; receiving an attestation result at the certificate authority, the attestation result indicating whether the CSR is valid; and based on the attestation result, receiving by the sovereign cloud, the leaf certificate when the attestation result is positive, or a rejection of the CSR when a discrepancy is detected.
Clause B. The method as in clause A, wherein the HAS is configured to compare the TPM-stored measurement of the root certificate against an expected measurement and determine whether the TPM-stored measurement of the root certificate matches the expected measurement.
Clause C. The method as in clause B, wherein the expected measurement is based on an authenticated root certificate received from the certificate authority.
Clause D. The method as in clause A, wherein the PCR comprises a boot event log, and wherein the HAS is configured to parse the event log for available root certificates, compare each identified root certificate against an authenticated root certificate received from the certificate authority, and reject the CSR if an invalid root certificate is identified.
Clause E. The method of clause A, wherein the cryptographic measurement of the root certificate stored in the TPM is generated using a secure hash function.
Clause F. The method of clause A, wherein the TPM attestation request initiated by the HAS includes a challenge-response mechanism using a nonce to prevent replay attacks.
Clause G. The method of clause A, wherein when comparing the TPM-stored measurement of the root certificate against the expected measurement, the HAS is configured to compare the received attestation request with a pre-stored reference measurement of the root certificate.
Clause H. The method of clause A, wherein the certificate authority is configured to integrate with a Public Key Infrastructure (PKI) framework to enforce additional security policies during the leaf certificate issuance.
Clause I. A system for provisioning a client root certificate, comprising: memory storing computer program instructions; and one or more processors configured to execute the computer program instructions to: retrieve, during a boot process of a client device, a root certificate from a first source; measure a cryptographic measurement of the root certificate in a secure hardware component of the client device; wherein the cryptographic measurement is stored in a register of the secure hardware component; generate a signing request for a leaf certificate based on the register, the signing request comprising at least the stored measurement of the root certificate; transmit the signing request to a certificate authority for verification; wherein the signing request is forwarded to a hardware attestation mechanism for attestation, and wherein the hardware attestation mechanism is configured to verify the signing request; receive an attestation result at the certificate authority, the attestation result indicating whether the signing request is valid; and based on the attestation result, receive by the client device, the leaf certificate when the attestation result is positive, or a rejection of the signing request when a discrepancy is detected.
Clause J. The system as in clause I, wherein the hardware attestation mechanism is configured to compare the stored measurement of the root certificate against an expected measurement and determine whether the stored measurement of the root certificate matches the expected measurement.
Clause K. The system as in clause J, wherein the expected measurement is based on an authenticated root certificate received from the certificate authority.
Clause L. The system as in clause I, wherein the register comprises a boot event log, and wherein the hardware attestation mechanism is configured to parse the event log for available root certificates, compare each identified root certificate against an authenticated root certificate received from the certificate authority, and reject the signing request if an invalid root certificate is identified.
Clause M. The system as in clause I, wherein the cryptographic measurement of the root certificate stored in the secure hardware component is generated using a secure hash function.
Clause N. The system as in clause I, wherein the secure hardware component attestation request initiated by the hardware attestation mechanism includes a challenge-response mechanism using a nonce to prevent replay attacks.
Clause O. The system as in clause I, wherein when comparing the stored measurement of the root certificate against the expected measurement, the hardware attestation mechanism is configured to compare the received attestation request with a pre-stored reference measurement of the root certificate.
Clause P. The system as in clause I, wherein the certificate authority is configured to integrate with a Public Key Infrastructure (PKI) framework to enforce additional security policies during the leaf certificate issuance.
Clause Q. The system as in clause I, wherein the client device is a sovereign cloud.
Clause R. One or more non-transitory computer storage media having computer executable instructions stored thereon which, when executed by one or more processors, cause the processors to execute a method for provisioning a client root certificate, comprising: during a boot process of a sovereign cloud, retrieving a root certificate from a first source; measuring a cryptographic measurement of the root certificate in a Trusted Platform Module (TPM) of the sovereign cloud; wherein the cryptographic measurement is stored in a Platform Configuration Register (PCR) of the TPM; generating a Certificate Signing Request (CSR) for a leaf certificate based on the PCR, the CSR comprising at least the TPM-stored measurement of the root certificate; transmitting the CSR to a certificate authority for verification; wherein the CSR is forwarded to a Hardware Attestation Service (HAS) for attestation; wherein the HAS is configured to compare the TPM-stored measurement of the root certificate against an expected measurement and determine whether the TPM-stored measurement of the root certificate matches the expected measurement; and wherein the expected measurement is based on an authenticated root certificate received from the certificate authority; receiving an attestation result at the certificate authority, the attestation result indicating whether the CSR is valid; and based on the attestation result, receiving by the sovereign cloud, the leaf certificate when the attestation result is positive, or a rejection of the CSR when a discrepancy is detected.
Clause S. The one or more non-transitory computer storage media as in clause 18, wherein the PCR comprises a boot event log, and wherein the HAS is further configured to parse the event log for available root certificates, compare each identified root certificate against an authenticated root certificate received from the certificate authority, and reject the CSR if an invalid root certificate is identified.
Clause T. The one or more non-transitory computer storage media as in clause 18, wherein when comparing the TPM-stored measurement of the root certificate against the expected measurement, the HAS is configured to compare the received attestation request with a pre-stored reference measurement of the root certificate.
Clause U. Systems and methods for provisioning a sovereign cloud root certificate, retrieve, during a boot process of a sovereign cloud, a root certificate from a first source; measure a cryptographic measurement of the root certificate in a Trusted Platform Module (TPM) of the sovereign cloud, which is stored in a Platform Configuration Register (PCR) of the TPM; generate a Certificate Signing Request (CSR) including the TPM-stored measurement for a leaf certificate based on the PCR; transmit the CSR to a certificate authority for verification; wherein the CSR is forwarded to a Hardware Attestation Service (HAS) for attestation; receiving an attestation result at the certificate authority, the attestation result indicating whether the CSR is valid; and based on the attestation result, receive by the sovereign cloud, the leaf certificate when the attestation result is positive, or a rejection of the CSR when a discrepancy is detected.

Those skilled in the art will also appreciate that while various items are illustrated as being stored in memory or on storage while being used, these items or portions of them may be transferred between memory and other storage devices for purposes of memory management and data integrity. Alternatively, in other embodiments some or all of the software components may execute in memory on another device and communicate with the illustrated computer system via inter-computer communication. Some or all of the system components or data structures may also be stored (e.g., as instructions or structured data) on a computer-accessible medium or a portable article to be read by an appropriate drive, various examples of which are described above. In some embodiments, instructions stored on a computer-accessible medium separate from computer system 1000 may be transmitted to computer system 1000 via transmission media or signals such as electrical, electromagnetic, or digital signals, conveyed via a communication medium such as a network or a wireless link. Various embodiments may further include receiving, sending, or storing instructions or data implemented in accordance with the foregoing description upon a computer-accessible medium. Accordingly, the present techniques may be practiced with other computer system configurations.

In block diagrams, illustrated components are depicted as discrete functional blocks, but embodiments are not limited to systems in which the functionality described herein is organized as illustrated. The functionality provided by each of the components may be provided by software or hardware modules that are differently organized than is presently depicted, for example such software or hardware may be intermingled, conjoined, replicated, broken up, distributed (e.g., within a data center or geographically), or otherwise differently organized. The functionality described herein may be provided by one or more processors of one or more computers executing code stored on a tangible, non-transitory, machine readable medium. In some cases, notwithstanding use of the singular term "medium," the instructions may be distributed on different storage devices associated with different computing devices, for instance, with each computing device having a different subset of the instructions, an implementation consistent with usage of the singular term "medium" herein. In some cases, external (e.g., third party) content delivery networks may host some or all of the information conveyed over networks, in which case, to the extent information (e.g., content) is said to be supplied or otherwise provided, the information may be provided by sending instructions to retrieve that information from a content delivery network.

The reader should appreciate that the present application describes several independently useful techniques. Rather than separating those techniques into multiple isolated patent applications, applicants have grouped these techniques into a single document because their related subject matter lends itself to economies in the application process. But the distinct advantages and aspects of such techniques should not be conflated. In some cases, embodiments address all of the deficiencies noted herein, but it should be understood that the techniques are independently useful, and some embodiments address only a subset of such problems or offer other, unmentioned benefits that will be apparent to those of skill in the art reviewing the present disclosure. Due to costs constraints, some techniques disclosed herein may not be presently claimed and may be claimed in later filings, such as continuation applications or by amending the present claims. Similarly, due to space constraints, neither the Abstract nor the Summary sections of the present document should be taken as containing a comprehensive listing of all such techniques or all aspects of such techniques.

It should be understood that the description and the drawings are not intended to limit the present techniques to the particular form disclosed, but to the contrary, the intention is to cover all modifications, equivalents, and alternatives falling within the spirit and scope of the present techniques as defined by the appended claims. Further modifications and alternative embodiments of various aspects of the techniques will be apparent to those skilled in the art in view of this description. Accordingly, this description and the drawings are to be construed as illustrative only and are for the purpose of teaching those skilled in the art the general manner of carrying out the present techniques. It is to be understood that the forms of the present techniques shown and described herein are to be taken as examples of embodiments. Elements and materials may be substituted for those illustrated and described herein, parts and processes may be reversed or omitted, and certain features of the present techniques may be utilized independently, all as would be apparent to one skilled in the art after having the benefit of this description of the present techniques. Changes may be made in the elements described herein without departing from the spirit and scope of the present techniques as described in the following claims. Headings used herein are for organizational purposes only and are not meant to be used to limit the scope of the description.

As used throughout this application, the word "may" is used in a permissive sense (i.e., meaning having the potential to), rather than the mandatory sense (i.e., meaning must). The words "include", "including", and "includes" and the like mean including, but not limited to. As used throughout this application, the singular forms "a," "an," and "the" include plural referents unless the content explicitly indicates otherwise. Thus, for example, reference to "an element" or "a element" includes a combination of two or more elements, notwithstanding use of other terms and phrases for one or more elements, such as "one or more." The term "or" is, unless indicated otherwise, non-exclusive, i.e., encompassing both "and" and "or." Terms describing conditional relationships, e.g., "in response to X, Y," "upon X, Y,", "if X, Y," "when X, Y," and the like, encompass causal relationships in which the antecedent is a necessary causal condition, the antecedent is a sufficient causal condition, or the antecedent is a contributory causal condition of the consequent, e.g., "state X occurs upon condition Y obtaining" is generic to "X occurs solely upon Y" and "X occurs upon Y and Z." Such conditional relationships are not limited to consequences that instantly follow the antecedent obtaining, as some consequences may be delayed, and in conditional statements, antecedents are connected to their consequents, e.g., the antecedent is relevant to the likelihood of the consequent occurring. Statements in which a plurality of attributes or functions are mapped to a plurality of objects (e.g., one or more processors performing steps A, B, C, and D) encompasses both all such attributes or functions being mapped to all such objects and subsets of the attributes or functions being mapped to subsets of the attributes or functions (e.g., both all processors each performing steps A-D, and a case in which processor 1 performs step A, processor 2 performs step B and part of step C, and processor 3 performs part of step C and step D), unless otherwise indicated. Similarly, reference to "a computer system" performing step A and "the computer system" performing step B may include the same computing device within the computer system performing both steps or different computing devices within the computer system performing steps A and B. Further, unless otherwise indicated, statements that one value or action is "based on" another condition or value encompass both instances in which the condition or value is the sole factor and instances in which the condition or value is one factor among a plurality of factors. Unless otherwise indicated, statements that "each" instance of some collection have some property should not be read to exclude cases where some otherwise identical or similar members of a larger collection do not have the property, i.e., each does not necessarily mean each and every. Limitations as to sequence of recited steps should not be read into the claims unless explicitly specified, e.g., with explicit language like "after performing X, performing Y," in contrast to statements that might be improperly argued to imply sequence limitations, like "performing X on items, performing Y on the X'ed items," used for purposes of making claims more readable rather than specifying sequence. Statements referring to "at least Z of A, B, and C," and the like (e.g., "at least Z of A, B, or C"), refer to at least Z of the listed categories (A, B, and C) and do not require at least Z units in each category. Unless specifically stated otherwise, as apparent from the discussion, it is appreciated that throughout this specification discussions utilizing terms such as "processing," "computing," "calculating," "determining" or the like refer to actions or processes of a specific apparatus, such as a special purpose computer or a similar special purpose electronic processing/computing device. Features described with reference to geometric constructs, like "parallel," "perpendicular/orthogonal," "square", "cylindrical," and the like, should be construed as encompassing items that substantially embody the properties of the geometric construct, e.g., reference to "parallel" surfaces encompasses substantially parallel surfaces. The permitted range of deviation from Platonic ideals of these geometric constructs is to be determined with reference to ranges in the specification, and where such ranges are not stated, with reference to industry norms in the field of use, and where such ranges are not defined, with reference to industry norms in the field of manufacturing of the designated feature, and where such ranges are not defined, features substantially embodying a geometric construct should be construed to include those features within 15% of the defining attributes of that geometric construct. The terms "first", "second", "third," "given" and so on, if used in the claims, are used to distinguish or otherwise identify, and not to show a sequential or numerical limitation. As is the case in ordinary usage in the field, data structures and formats described with reference to uses salient to a human need not be presented in a human-intelligible format to constitute the described data structure or format, e.g., text need not be rendered or even encoded in Unicode or ASCII to constitute text; images, maps, and data-visualizations need not be displayed or decoded to constitute images, maps, and data-visualizations, respectively; speech, music, and other audio need not be emitted through a speaker or decoded to constitute speech, music, or other audio, respectively. Computer implemented instructions, commands, and the like are not limited to executable code and may be implemented in the form of data that causes functionality to be invoked, e.g., in the form of arguments of a function or API call. To the extent bespoke noun phrases are used in the claims and lack a self-evident construction, the definition of such phrases may be recited in the claim itself, in which case, the use of such bespoke noun phrases should not be taken as invitation to impart additional limitations by looking to the specification or extrinsic evidence.

In this patent, to the extent any U.S. patents, U.S. patent applications, or other materials (e.g., articles) have been incorporated by reference, the text of such materials is only incorporated by reference to the extent that no conflict exists between such material and the statements and drawings set forth herein. In the event of such conflict, the text of the present document governs, and terms in this document should not be given a narrower reading in virtue of the way in which those terms are used in other materials incorporated by reference.

While the systems and methods described herein have generally be described with respect to a single legacy language being translated to a modernized coding language (e.g., one-to-one translation of a first language to a second language), in various embodiments, the same processes may be implemented in a one-to-many framework. For example, in some embodiments, a user may indicate one or more second languages to which a first language is to be translated. Additionally or alternatively, in some embodiments, one or more translation recommendations may be provided (as described herein) for multiple translations. In either event, embodiments of the systems and methods described herein may be configured to process multiple translations, e.g., in parallel and/or in series (e.g., based on an identified priority), as described herein.

This written description uses examples to disclose the implementations, including the best mode, and to enable any person skilled in the art to practice the implementations, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A method for provisioning a sovereign cloud root certificate, comprising:
during (310) a boot process of a sovereign cloud, retrieving a root certificate from a first source;
measuring (320) a cryptographic measurement of the root certificate in a Trusted Platform Module, TPM, of the sovereign cloud;
wherein the cryptographic measurement is stored in a Platform Configuration Register, PCR, of the TPM;
generating (330) a Certificate Signing Request, CSR, for a leaf certificate based on the PCR, the CSR comprising at least the TPM-stored measurement of the root certificate;
transmitting (340) the CSR to a certificate authority for verification;
wherein the CSR is forwarded to a Hardware Attestation Service, HAS, for attestation, and
wherein the HAS is configured to verify the CSR;
receiving (350) an attestation result at the certificate authority, the attestation result indicating whether the CSR is valid; and
based on the attestation result, receiving (360) by the sovereign cloud, the leaf certificate when the attestation result is positive, or a rejection of the CSR when a discrepancy is detected.

2. The method as in claim 1, wherein the HAS is configured to compare the TPM-stored measurement of the root certificate against an expected measurement and determine whether the TPM-stored measurement of the root certificate matches the expected measurement.

3. The method as in claim 2, wherein the expected measurement is based on an authenticated root certificate received from the certificate authority.

4. The method as in any preceding claim, wherein the PCR comprises a boot event log, and wherein the HAS is configured to parse the event log for available root certificates, compare each identified root certificate against an authenticated root certificate received from the certificate authority, and reject the CSR if an invalid root certificate is identified.

5. The method of any preceding claim, wherein the cryptographic measurement of the root certificate stored in the TPM is generated using a secure hash function.

6. The method of any preceding claim, wherein the TPM attestation request initiated by the HAS includes a challenge-response mechanism using a nonce to prevent replay attacks.

7. The method of any preceding claim, wherein when comparing the TPM-stored measurement of the root certificate against the expected measurement, the HAS is configured to compare the received attestation request with a pre-stored reference measurement of the root certificate.

8. The method of any preceding claim, wherein the certificate authority is configured to integrate with a Public Key Infrastructure, PKI, framework to enforce additional security policies during the leaf certificate issuance.

9. A system (1000) for provisioning a client root certificate, comprising:
memory (1020) storing computer program instructions; and
one or more processors (1010a) configured to execute the computer program instructions to:
retrieve, during a boot process of a client device, a root certificate from a first source;
measure a cryptographic measurement of the root certificate in a secure hardware component of the client device;
wherein the cryptographic measurement is stored in a register of the secure hardware component;
generate a signing request for a leaf certificate based on the register, the signing request comprising at least the stored measurement of the root certificate;
transmit the signing request to a certificate authority for verification;
wherein the signing request is forwarded to a hardware attestation mechanism for attestation, and
wherein the hardware attestation mechanism is configured to verify the signing request;
receive an attestation result at the certificate authority, the attestation result indicating whether the signing request is valid; and
based on the attestation result, receive by the client device, the leaf certificate when the attestation result is positive, or a rejection of the signing request when a discrepancy is detected.

10. The system as in claim 9, wherein the hardware attestation mechanism is configured to compare the stored measurement of the root certificate against an expected measurement and determine whether the stored measurement of the root certificate matches the expected measurement.

11. The system as in claim 10, wherein the expected measurement is based on an authenticated root certificate received from the certificate authority.

12. The system as in any of claims 9 to 11, wherein the register comprises a boot event log, and wherein the hardware attestation mechanism is configured to parse the event log for available root certificates, compare each identified root certificate against an authenticated root certificate received from the certificate authority, and reject the signing request if an invalid root certificate is identified.

13. The system as in any of claims 9 to 12, wherein the cryptographic measurement of the root certificate stored in the secure hardware component is generated using a secure hash function.

14. The system as in any of claims 9 to 13, wherein the client device is a sovereign cloud.

15. One or more non-transitory computer storage media having computer executable instructions stored thereon which, when executed by one or more processors, cause the processors to execute a method for provisioning a client root certificate, comprising:
during a boot process of a sovereign cloud, retrieving a root certificate from a first source;
measuring a cryptographic measurement of the root certificate in a Trusted Platform Module, TPM, of the sovereign cloud;
wherein the cryptographic measurement is stored in a Platform Configuration Register, PCR, of the TPM;
generating a Certificate Signing Request, CSR, for a leaf certificate based on the PCR, the CSR comprising at least the TPM-stored measurement of the root certificate;
transmitting the CSR to a certificate authority for verification;
wherein the CSR is forwarded to a Hardware Attestation Service, HAS, for attestation;
wherein the HAS is configured to compare the TPM-stored measurement of the root certificate against an expected measurement and determine whether the TPM-stored measurement of the root certificate matches the expected measurement; and
wherein the expected measurement is based on an authenticated root certificate received from the certificate authority;
receiving an attestation result at the certificate authority, the attestation result indicating whether the CSR is valid; and
based on the attestation result, receiving by the sovereign cloud, the leaf certificate when the attestation result is positive, or a rejection of the CSR when a discrepancy is detected.
